# EUROPEAN PATENT SPECIFICATION

(11) **EP 0 556 283 B1**
(45) Date of publication and mention of the grant of the patent: **11.02.1998**
(21) Application number: 92900024.8
(22) Date of filing: 29.10.1991
(51) Int. Cl.: A01N 37/02, A01N 37/06, A01N 57/02

(54) **IMPROVED FATTY ACID-BASED HERBICIDAL COMPOSITION**
AUF FETTSÄUREN BASIERENDE HERBIZIDZUSAMMENSETZUNG
COMPOSITION HERBICIDE AMELIOREE A BASE D'ACIDE GRAS

(30) Priority: 02.11.1990 US 608306
(43) Date of publication of application: 25.08.1993
(73) Proprietor: SAFER, INC., Bloomington, Minnesota 55431-2543 (US)
(72) Inventor: MASON, Wenda, Saanichton, British Columbia V0S 1MO (CA)
(74) Representative: Türk, Gille, Hrabal, Leifert
(86) International application number: US9108072
(87) International publication number: WO9207467

(56) References cited:
- EP-A- 0 494 386
- WO-A-89/03178
- WO-A-90/07275
- WO-A-92/06596
- WO-A-92/11764
- FR-A- 2 589 328
- US-A- 2 626 862
- US-A- 3 645 716
- US-A- 3 977 860
- US-A- 4 341 549
- US-A- 4 405 531
- US-A- 4 436 547
- US-A- 4 834 908
- US-A- 4 975 110
- US-A- 5 035 741
- PLANT PROTECTION QUARTERLY vol. 4, no. 4, 1989, pages 158 - 164 A.J.WELLS 'Adjuvants, glyphosate efficacy and post-spraying rainfall'
- JOURNAL OF AQUATIC PLANT MANAGEMENT vol. 28, 1990, FORT MYERS, FLA, US pages 23 - 37 D.G.SHILLING ET AL. 'Influence of Surfactants and Additives on Phytotoxicity of Glyphosate to Torpedograss'
- DATABASE WPI Week 8705, Derwent Publications Ltd., London, GB; AN 87-032875 (05)
- GROSSBARD, E. (Editor) et al., "The Herbicide Glyphosate", published 1985 by Butterworth & Co. Ltd., see pages 225-226.

## Description

### Background of the Invention

This invention relates to herbicidal compositions which ore effective, economical and environmentally compatible. More Particularly, an improved herbicidal composition has been obtained by combining a fatty acid-based active ingredient with & glyphosate-based active ingredient.

Herbicides are widely used to control the rate of growth or to cause mortality in unwanted or undesirable plant species. Among the most widely used herbicides are those which are petrochemical-based. Although quite effective, many petrochemical-based herbicides are considered to pose hazards to the environment, as well as to humans, animals and aquatic life.

Due to concerns for such hazards posed by petrochemical-based herbicides, several environmentally compatible herbicides have been developed. Fatty acid based compounds having between eight and eighteen carbon atoms serve as an example of one class of environmentally compatible herbicides. These compounds occur naturally in soil and decompose quite rapidly (i.e., within about 1-3 days) within soil. An exemplary fatty acid-based herbicidal compositions is commercially available from Safer, Inc. under the trademark SHARPSHOOTER. This herbicidal composition utilizes an active ingredient which is a mixture of partially saponified fatty acids. Other fatty acid-based herbicidal compositions are disclosed in U.S. Patent Application Serial Nos. 421,146 and 421,376, both of which were filed on October 13, 1989.

Such fatty acid-based herbicides are quite effective for most applications. However, like most pesticides, they are not well suited for all applications. For example, these compositions are not able to translocate and arc thus only effective on the plant tissue which is contacted by the herbicidal composition. Also, because such compositions are used in relatively high concentrations of active ingredient, i.e., 3 to 6 percent, their use can be costly.

One petrochemical-based herbicide which apparently exhibits minimal environmental impact is a glyphosate-based composition. This compound is an effective, broad spectrum herbicide which has the ability to translocate within plant systems. Glyphosate-based herbicides can be expensive to use, and typically must be applied at concentrations in the range of 1 to 2 percent. One potential drawback to the use of glyphosate-based compounds is that they do not occur naturally and have an average half-life in soil slightly less than 60 days.

Patent Specification No. WO-A-89/03178 discloses the use of mixtures of a fatty acid herbicide and an ammonium compound, such as a ammonium sulphamate, ammonium nitrate, or ammonium sulphate without reference at all to glyphosate.

Plant Protection Quarterly 4(4), 156-168 (1989) discloses the combination of glyphosphate and an adjuvant which includes a long chain free fatty acid.

J.Aquat.Plant.Manage. 28, 23-27 (1990) discloses a composition containing a glyphosphate and a surfactant which includes a long chain fatty acid.

US-A-4436547 discloses that a fatty acid may be used as a nutrient to stimulate plant growth and enhance the effectiveness of certain agricultural chemicals such a plant growth regulators, insecticides and herbicides. The fatty acid acts as a precursor of molecules required in the growth process and through degradation provides a source of ATP and NADPH, as with a carbohydrate source.

While fatty acid based herbicides are advantageous due to their environmental compatibility, they lack the ability to translocate, and must be used in relatively high concentrations. Glyphosate-based herbicides must also be used in relatively high concentrations and are relatively expensive. Moreover, it would be desirable to Provide a herbicidal composition which combines the beneficial features of these herbicides, while reducing the amounts of non-naturally-occurring compounds, such as glyphosate, which are environmentally released.

It is thus an object of the invention to provide an effective, broad spectrum herbicide which is environmentally compatible and economically feasible. Another object is to provide a herbicide which has the advantages of the fatty acid-based herbicide, but which also has the ability to translocate. An additional object of the invention is to provide an effective herbicidal composition with improved efficacy. A further object of the invention is to provide a herbicidal composition which combines two known active ingredients in such a way that the concentration of each of the individual components is present at levels less than what is recommended for herbicidal activity. It is also an object of the invention to provide an effective herbicide while at the same time reducing the pesticide load in the environment. Other objects will be apparent to those skilled in the art upon reading the following disclosure.

### Summary of the Invention

The present invention provides an effective, environmentally compatible herbicidal composition which combines two known active ingredients such that each is present at a concentration below what is recommended for herbicidal activity of each ingredient alone. The composition combines a fatty acid-based herbicide with a glyphosate-based herbicide. The fatty acid component is one or a mixture of fatty acids such as caprylic acid, pelargonic acid, capric acid, undecanoic acid, 10-undecenoic acid and lauric acid,. In another embodiment salts, or mixtures of various salts of these fatty acids may be used as one herbicidal active ingredient. The glyphosate component preferably is N-(phosphonomethyl)glycine, its derivatives or the salts or the mixture of salts thereof. The fatty acid or fatty acid salt component is present in the range of 0.1 to 3.0 percent by weight of the composition while the glyphosate component is present at 0.08 to 2.0 percent by weight of the composition.

### Detailed Description of the Invention

The herbicidal composition of the invention, as noted above, comprises a combination of two active ingredients in an aqueous solution. One active ingredient comprises one or a mixture of fatty acids or salts of fatty acids. The other active ingredient is a glyphosate-based compound such as N-(phosphonomethyl)glycine. The concentration range of fatty acid active ingredient is about 0.1 to 3 percent by weight and the concentration range of glyphosate active ingredient component is about 0.08 to 2.0% by weight.

The fatty acid component of this herbicidal composition can be one or a mixture of fatty acids. The fatty acids which may be used include caprylic acid, pelargonic acid, capric acid, undecanoic acid, 10-undecenoic acid, lauric acid and mixtures thereof. Pelargonic acid is a preferred fatty acid-based active ingredient. However, in other embodiments mixtures of fatty acids such as mixtures of pelargonic, capric and lauric acids; or a mixture of capric and lauric acids may be used as well.

An exemplary non-saponified fatty acid active ingredient is pelargonic acid. Also, a mixture of pelargonic acid and capric acid, at a 1:1 ratio, serves as an effective saponified active ingredient.

Various fatty acid salts or mixtures of fatty acid salts may also be used as the fatty acid component of the herbicidal composition of this invention. These include sodium, potassium and other metal salts, as well as ammonium salts of caprylic acid, pelargonic acid, capric acid, undecanoic acid, 10-undecenoic acid, lauric acid and mixtures thereof

Among the most preferred fatty acid salts are the sodium and potassium salts of pelargonic acid.

As noted above, a variety of combinations of fatty acids or fatty acid salts may be used in preparing the fatty acid active ingredient of the present herbicidal composition. The fatty acid active ingredient may also include a variety of surfactants, emulsifiers and other formulation enhancers. One of ordinary skill in the art will easily be able to decide whether any such compounds arc necessary, and if so, to choose the desired compounds. By way of example, however, exemplary surfactants include quarternary ammonium salt, ethoxylated phosphate esters, polyoxyethylene derivatives of fatty acid partial esters of sorbitol anhydrides, castor oil ethoxylate, nonyl phenol ethoxylates, isopropyl alcohol and mixtures thereof. Exemplary quaternary ammonium salt compounds are commercially available under the trademarks "Ethoquad" and "Arquad" from Akzo America, Inc. of Chicago, Illinois. Exemplary emulsifiers include those which arc alkylaryl sulfonate-based polyoxyethylene derivatives of fatty acid and partial esters of sorbitol anydrides. Commercially available examples include those sold under the trademark "Atlox" and "Tween" by Atkemix, Inc. and those sold under the trademark "Emsorb" by Quantum Chemicals of Cincinnati, Ohio. Formulation enhancers may include alcohols and oils such as terpenoids, triglycerides and mineral oils.

A number of exemplary formulations which may be used as the fatty acid active ingredient of this invention are disclosed in PCT Patent Application Nos. WO-A-91/05471 and WO-A-91/05472 both of which were filed on October 13, 1989 and are hereby incorporated by reference. However it is understood that the fatty acid active ingredient may comprise many combinations of the fatty acids or saponified fatty acids noted above, together with the surfactants, emulsifiers, and formulation enhancers noted above and others well known in the art.

The other active ingredient of the herbicidal composition is the glyphosate-based compound. As used herein the term "glyphosate-based" includes N-(phosphonomethyl) glycine and various related compounds and salts as disclosed in U.S. Patent No. 3,799,758, which is incorporated herein by reference.

Glyphosate-based compounds typically have the general formula:

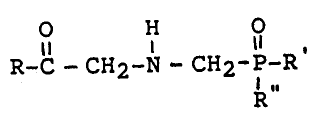

In the above formula R, R' and R'' can be -OH, halogen or -SH groups. Various other glyphosate-based compounds are described in U.S. Patent No. 3,799,758 which is hereby incorporated by reference. Among the moot preferred glyphosate-based compounds is N-(phosphonomethyl) glycine in which R, R' and R'' are all hydroxy groups.

In addition to the glyphosate-based compounds described above, the glyphosate-based component of this herbicidal composition may also include various salts of glyphosate-based compounds. Such salts may be prepared by the partial or complete neutralization of the acid with the appropriate base, carbonate, ammonia or organic amine. One preferred salt of a glyphosate-based compound is the isopropyl amine salt of N-(phosphonomethyl)glycine.

The glyphosate-based component may or may not be formulated with various surfactants. One of ordinary skill in the art will easily be able to decide whether surfactants are necessary, and if so, to choose the necessary surfactants.

Exemplary glyphosate-based compounds are commercially available from Monsanto Company of St. Louis, Missouri under the trademarks ROUNDUP, ACCORD, HONCHO, RANGER, and RODEO.

The glyphosate-based component of the herbicidal composition may be present in the composition at a concentration range of about 0.08 to 2.0% by weight. The preferred concentration range is about 0.1 to 1.0% by weight. If used alone, the preferred concentration range would have little or no herbicidal efficiency since the recommended application concentration is in the range of 1 to 2 percent by weight. Similarly, the fatty acid may be used in a concentration range of about 0.1 to 3.0 percent by weight. A more preferred concentration range for the fatty acid active ingredient is 0.5 to 1.0%. Which is below the concentration range of 3-6% ordinarily necessary to achieve herbicidal activity.

The herbicidal composition of this invention may be prepared by adding the desired amount of the glyphosate-based active ingredient to the required amount of water and mixing thoroughly. The desired amount of fatty acid (saponified or non-saponified) active ingredient formulation is then added and thoroughly mixed into the formulation. This formulation may be pre-formulated so as to form a ready-to-use composition, or may also be prepared just prior to use by tank mixing the two components.In some instances a pre-formulated, ready-to-use composition may require agitation immediately prior to use.

The present herbicidal compositions are foliar applied, nonselective herbicides which may be sprayed upon unwanted weeds and grasses. These herbicidal compositions may be provided in a ready-to-use formulation or in a concentrated formulation which must be diluted with water before application. The formulation applied to unwanted weeds and grasses typically contains in the range of approximately 0.1 to 3 percent fatty acid component and 0.08 to 2.0 glyphosate-based component. More preferably, the fatty acid component is present at 0.5-1.0% and the glyphosate-based component is present at 0.1-1.0%.

The herbicidal compositions of the invention are effective and environmentally compatible. They are broad-spectrum, non-selective herbicides useful in crop, non-crop, aquatic, and domestic weed control, especially in environmentally sensitive areas where reduced pesticide loads are desirable. The compositions are effective on most weed species and are applied as postemergence sprays to foliage of vegetation to be controlled. One advantage of these compositions is that they have the ability to translocate. The carrier volumes are those recommended for glyphosates (47 to 374 ℓ/ha, 5 to 40 gpa). Typically, 7 to 14 days are required before evidence of phytotoxicity or plant mortality appears.

The present composition is quite effective on perennial species, and on annual or biennial species of grasses, sedges, and broadleaf weeds.

The following non-limiting examples serve to further describe the invention.

### Example 1

Three species of weed, used in each test: Hypochoeris radicata (false dandelion), Sinapis, arvensis (wild mustard), and Avena sativa (oats), were grown in a greenhouse facility in 5.5cm square pots using a potting soil mix comprising peat, vermiculite, sand, and 4-10-10 fertilizer. Water-soluble 20-20-20 fertilizer was used as a supplement for the plants as required. The plants were selected for use based on uniformity and quality and were potted separately. One plant per pot each of H. radicata (6-10 leaves) and S. arvensis (4-6 leaves) were used. Six to eight plants of A. sativa (2-4 leaves) were used per pot. After spraying with a herbicidal composition (as described below) the pots were arranged in a randomized complete block design in sub-irrigated watering trays. Six to ten replicates (pots) were used per treatment.

Herbicidal treatments were applied using a spray chamber fitted with a TeeJet 8006E flat fan nozzle (available from Spraying Systems Co., Wheaton, Illinois), calibrated to spray at a volume of 60 gpa at 40 psi. Treatment solutions were freshly prepared for each experiment. Plant damage was assessed at 10 to 14 days after treatment using a pre-transformed 0-10 rating scale (0 representing no damage, 10 representing plant death) in accordance with the procedure outlined in Statistical Methods in Agricultural Research, Little, T.M. et al, J. Wiley and Sons, 1975, pp.119-120, 218.

The results of these experiments are shown in the tables which follow.

**TABLE I**

| Herbicide | | Phytotoxicity (%) | | | | | |
|---|---|---|---|---|---|---|---|
| | | H. radicata | | S. arvensis | | A. sativa | |
| | | Observed | Expected | Observed | Expected | Observed | Expected |
| 1. | Round-Up* (0.1%) | 22 | | 1 | | 4 | |
| | Formulation A** (0.1%) | 0 | | 0 | | 4 | |
| | Combination | 28 | 22 | 18 | 1 | 3 | 8 |
| 2. | Round-Up (0.1%) | 22 | | 1 | | 4 | |
| | Formulation A (0.5%) | 1 | | 0 | | 4 | |
| | Combination | 71 | 23 | 88 | 1 | 10 | 8 |
| 3. | Round-Up (0.1%) | 22 | | 1 | | 4 | |
| | Formulation A** (1.0%) | 2 | | 1 | | 6 | |
| | Combination | 64 | 24 | 39 | 2 | 58 | 10 |

| | | | | | | | |
|---|---|---|---|---|---|---|---|
| *Round-Up is commercially available from Monsanto Company. Its active ingredient is the isopropylamine salt of N-(phosphonomethyl) glycine. | | | | | | | |
| **Formulation A is a mixture of potassium pelargonate, potassium caprate and potassium laurate, in ratios of 1:1:2, used in this experiment at total active ingredient concentrations of 0.1, 0.5 an 1.0 percent by weight. | | | | | | | |

### Example 2

In a greenhouse facility four plant species were grown in 5.5cm square pots using a potting soil mix comprising peat, vermiculite, sand and 4-10-10 fertilizer. Water soluble 20-20-20 fertilizer was used as a supplement for the plants as required. The plant species used were corn, oats, radish and morningglory. The plants were selected for use based on uniformity and quality. The corn plants used were in the 3 to 4 leaf stage and two plants were present in each pot. The oats used were in the 2 to 4 leaf stage and four plants were present per pot. The radish plants used were in the 3 to 5 leaf stage and one plant was used per pot. The morningglory were in the 2 to 4 leaf stage with one plant per pot. After spraying with a herbicidal formulation, the pots were arranged in a randomized complete block design in sub-irrigated watering trays, and included a water-treated control treatment. Four replicates (pots) were used for each treatment.

Herbicidal treatments were applied and recorded as in Example 1.

The data obtained are presented in the tables which follow.

**TABLE 2**

| Herbicide | | Phytotoxicity (%) | | | | | |
|---|---|---|---|---|---|---|---|
| | | H. radicata | | S. arvensis | | A. sativa | |
| | | Observed | Expected | Observed | Expected | Observed | Expected |
| 1. | Round-Up (0.1%) | 22 | | 1 | | 1 | |
| | Sodium pelargonate (0.1%) | 0 | | 0 | | 0 | |
| | Combination | 47 | 22 | 35 | 1 | 2 | 1 |
| 2. | Round-Up (0.1%) | 22 | | 1 | | 1 | |
| | Sodium pelargonate (0.1%) | 0 | | 0 | | 0 | |
| | Combination | 47 | 22 | 80 | 1 | 2 | 1 |
| 3. | Round-Up (0.1%) | 22 | | 1 | | 1 | |
| | Sodium pelargonate (0.1%) | 0 | | 0 | | 1 | |
| | Combination | 56 | 22 | 88 | 2 | 2 | 2 |

**TABLE 3**

| Herbicide | | Phytotoxicity (%) | | | | | |
|---|---|---|---|---|---|---|---|
| | | H. radicata | | S. arvensis | | A. sativa | |
| | | Observed | Expected | Observed | Expected | Observed | Expected |
| 1. | Round-Up (0.1%) | 0 | | 30 | | 7 | |
| | Potassium pelargonate (0.1%) | 0 | | 0 | | 6 | |
| | Combination | 12 | 0 | 31 | 30 | 8 | 13 |
| 2. | Round-Up (0.1%) | 0 | | 30 | | 7 | |
| | Potassium pelargonate (0.5%) | 0 | | 0 | | 5 | |
| | Combination | 71 | 0 | 42 | 30 | 14 | 12 |
| 3. | Round-Up (0.1%) | 0 | | 30 | | 7 | |
| | Potassium pelargonate (0.5%) | 3 | | 2 | | 7 | |
| | Combination | 46 | 3 | 45 | 32 | 10 | 14 |

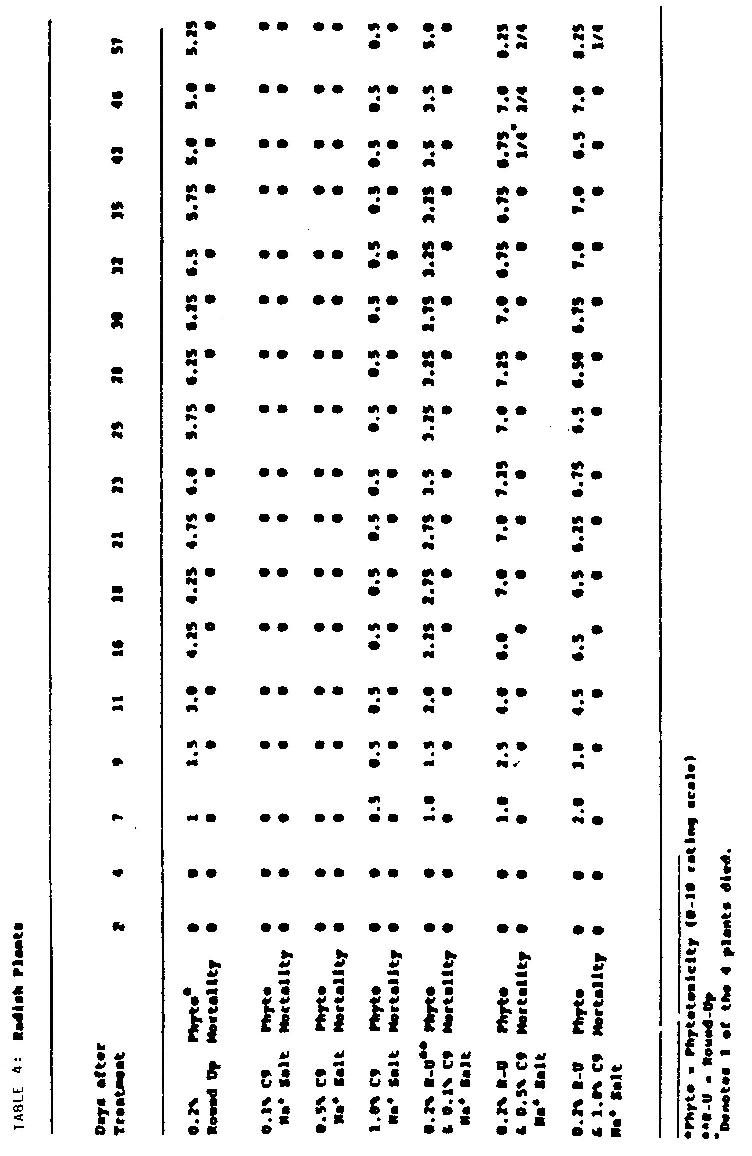

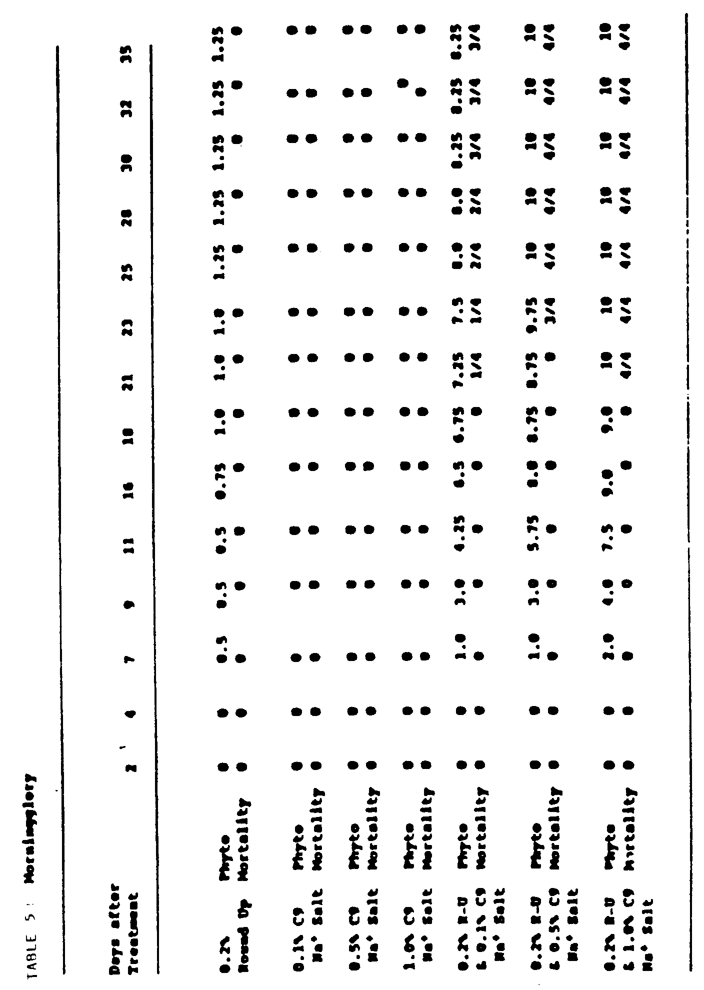

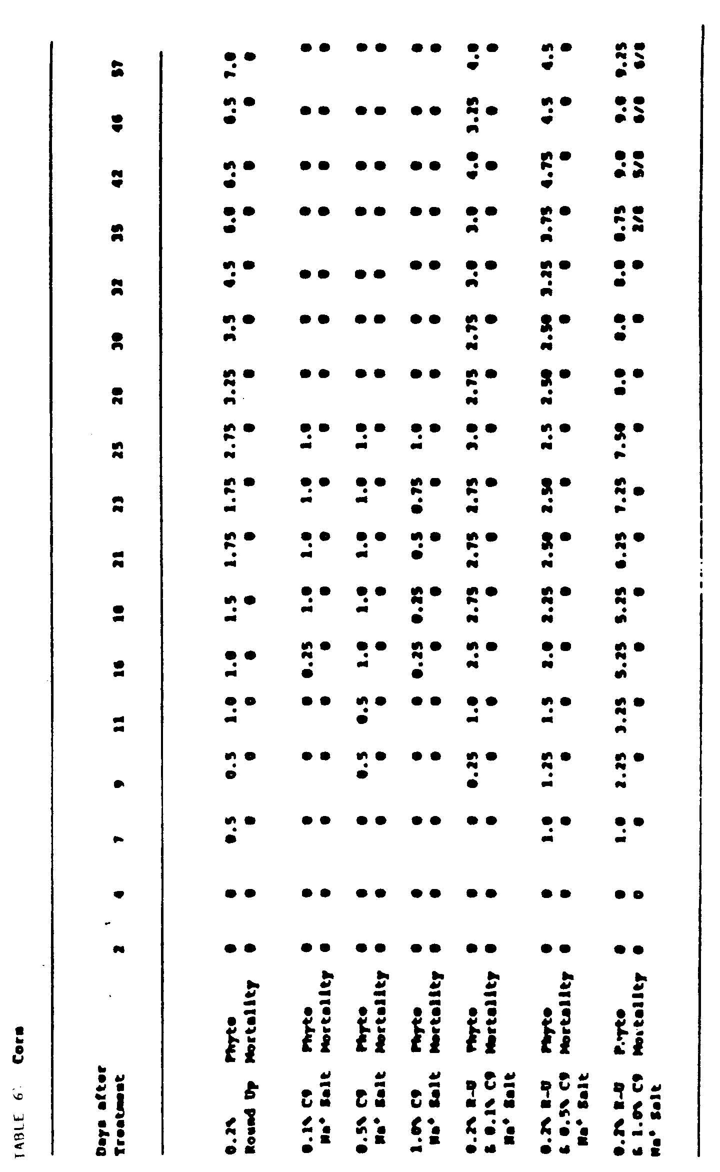

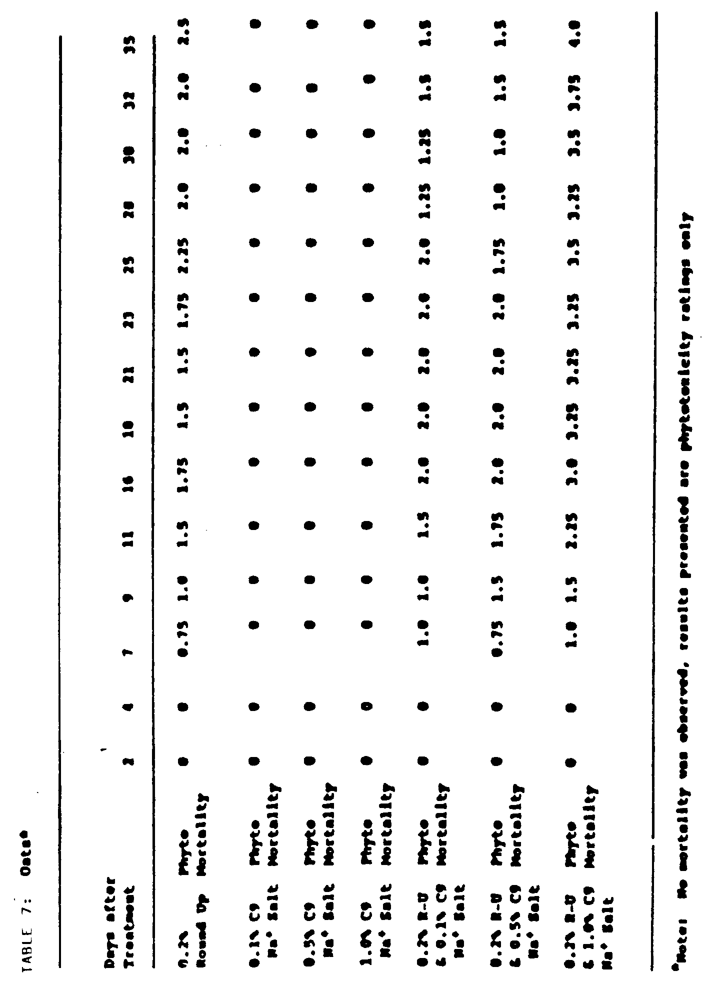

With respect to the above experiments, it is noted that fatty acid/glyphosate herbicides having glyphosate (Round-Up) concentrations of 0.5 to 1% usually caused so much damage to the test plants (approaching 100%) that evidence of potentiation was lost. The recommended rate of Round-Up for application to established weeds under field conditions is 1 to 2% of the product diluted in water. It is further noted that greenhouse-grown plants are generally more susceptible to lower rates of herbicide than are field-grown plants.

In addition, an enhanced herbicidal effect resulting from the application of a combination herbicide (including glyphosate-based herbicide and fatty acid based herbicide) in not supported in every species in each experiment. There are a number of reasons for this. Primarily, though, in herbicidal experiments, the conditions under which the plants are grown (light, temperature-and humidity), the age of the plants, the species and variety of plant, and the rate and method of application of herbicidal components all can influence the ratios at which enhanced herbicidal activity is observed. In addition, a test method selected may, in some cases, be so hypersensitive that the additive effect of the two active ingredient components results in plant death. Therefore potentiation cannot always be detected.

## Claims

1. An agricultural composition for controlling weeds comprising:
(a) a glyphosate-based herbicial ingredient present at 0.08 to 2.0 percent by weight of the composition; and
(b) a fatty acid-based herbicidal ingredient which is one or a mixture of fatty acids
or a salt or mixture of salts thereof, the fatty acid-based herbicidal ingredient being present at 0.1 to 3.0 percent by weight of the composition,
wherein the fatty acids are selected from the group consisting of caprylic acid, pelargonic acid, capric acid, undocanoic acid, 10-undecenoic acid, and lauric acid.

2. A composition as claimed in claim 1 wherein the salt or mixture of salts includes a potassium salt, a sodium salt, a calcium salt or an ammonium salt.

3. A composition as claimed in claims 1 or 2 wherein the glyphosate-based herbicidal ingredient includes a compound represented by the formula: 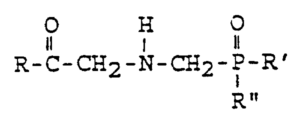 wherein R, R' and R'' are each independently -OH, halogen or -SH, or a salt or mixture of salts thereof.

4. A composition as claimed in claim 3 wherein the glyphosate-based herbicidal ingredient includes N-phosphonomethylglycine or a salt or mixture of salts thereof.

5. A composition as claimed in claim 4 wherein the glyphosate-based herbicidal ingredient includes an isopropylamine salt of N-phosphonomethylglycine.

6. A composition as claimed in any of claims 1-5 wherein the composition further includes an ingredient selected from the group consisting of a formulation enhancer, an emulsifier, and a surfactant.

7. A method for the control of weeds, said method comprising the administration to said weeds of an effective amount of a composition comprising
(a) a glyphosate-based herbicidal ingredient present at 0.08 to 2.0 percent by weight of the composition; and
(b) a fatty acid-based herbicidal ingredient which is one or a mixture of fatty acids
or a salt or mixture of salts thereof, the fatty acid-based herbicidal ingredient being present at 0.1 to 3.0 percent by weight of the composition, wherein the fatty acids are selected from the group consisting of caprylic acid, pelargonic acid, capric acid, undecanoic acid, 10-Undecenoic acid, and lauric acid.

8. A method of claim 7 wherein the glyphosate-based herbicidal ingredient includes a compound represented by the formula: 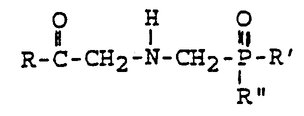 wherein R, R' and R'' are each independently -OH, halogen or -SH, or a salt or mixture of salts thereof.

9. A method-as claimed in claim 7 or claim 8 wherein the fatty acid is selected from the group consisting of caprylic acid, pelargonic acid, capric acids and mixture thereof; the glyphosate-based herbicidal ingredient includes N-phosphonomethylglycine or a salt or mixture of salts thereof.

10. A method as claimed in any of claims 7 - 9 wherein the composition is administered to the weeds at a volume or 47 to 374 litres per hectare.

## Patentansprüche

1. Landwirtschaftliche Zusammensetzung zur Unkrautbekämpfung, umfassend:
(a) einen auf Glyphosat basierenden herbiziden Bestandteil, der zu 0,08 bis 2,0 Gewichtsprozent der Zusammensetzung vorliegt; und
(b) einen auf Fettsäure basierenden herbiziden Bestandteil, welcher eine Fettsäure oder eine Mischung von Fettsäuren oder ein Salz davon oder eine Mischung von Salzen davon ist,
wobei der auf Fettsäure basierende herbizide Bestandteil zu 0,1 bis 3,0 Gewichtsprozent der Zusammensetzung vorliegt,
wobei die Fettsäuren aus der Caprylsäure, Pelargonsäure, Caprinsäure, Undecansäure, 10-Undecensäure und Laurinsäure umfassenden Gruppe gewählt werden.

2. Zusammensetzung gemäß Anspruch 1, worin das Salz oder die Mischung von Salzen ein Kaliumsalz, ein Natriumsalz, ein Calciumsalz oder ein Ammoniumsalz einschließt.

3. Zusammensetzung gemäß Anspruch 1 oder 2, worin der auf Glyphosat basierende herbizide Bestandteil eine Verbindung der Formel: 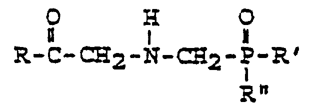 einschließt, in der R, R' und R'' jeweils unabhängig -OH, Halogen oder -SH bedeuten, oder ein Salz oder eine Mischung von Salzen davon.

4. Zusammensetzung gemäß Anspruch 3, wobei der auf Glyphosat basierende herbizide Bestandteil N-Phosphonomethylglycin oder ein Salz oder eine Mischung von Salzen davon einschließt.

5. Zusammensetzung gemäß Anspruch 4, wobei der auf Glyphosat basierende herbizide Bestandteil ein Isopropylaminsalz von N-Phosphonomethylglycin einschließt.

6. Zusammensetzung gemaß mindestens einem der Ansprüche 1 bis 5, wobei die Zusammensetzung ferner einen Bestandteil, gewählt aus der einen Formulierungsverbesserer, ein Emulgiermittel und ein oberflächenaktives Mittel umfassenden Gruppe gewählt wird.

7. Verfahren zur Unkrautbekämpfung, wobei das Verfahren das Verabreichen an das Unkraut einer wirksamen Menge einer Zusammensetzung, umfassend
(a) einen auf Glyphosat basierenden herbiziden Bestandteil, der zu 0,08 bis 2,0 Gewichtsprozent der Zusammensetzung vorliegt; und
(b) einen auf Fettsäure basierenden herbiziden Bestandteil, welcher eine Fettsäure oder eine Mischung von Fettsäuren oder ein Salz davon oder eine Mischung von Salzen davon ist, wobei der auf Fettsäure basierende herbizide Bestandteil zu 0,1 bis 3,0 Gewichtsprozent der Zusammensetzung vorliegt, umfaßt, wobei die Fettsäuren aus der Caprylsäure, Pelargonsäure, Caprinsäure, Undecansäure, 10-Undecensäure und Laurinsäure umfassenden Gruppe gewählt wird.

8. Verfahren gemäß Anspruch 7, wobei der auf Glyphosat basierende herbizide Bestandteil eine Verbindung der Formel: 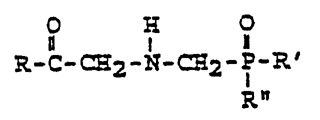 einschließt, in der R, R' und R'' jeweils unabhängig -OH, Halogen oder -SH bedeuten, oder ein Salz oder eine Mischung von Salzen davon.

9. Verfahren gemaß Anspruch 7 oder Anspruch 8, wobei die Fettsäure aus der Caprylsäure, Pelargonsäure, Caprinsäure und Mischungen davon umfassenden Gruppe gewählt wird; der auf Glyphosat basierende herbizide Bestandteil schließt N-Phosphonomethylglycin oder ein Salz oder eine Mischung von Salzen davon ein.

10. Verfahren gemäß mindestens einem der Ansprüche 7 bis 9, wobei die Zusammensetzung mit einem Volumen von 47 bis 374 Litern pro Hektar an das Unkraut verabreicht wird.

## Revendications

1. Composition agricole pour le contrôle des mauvaises herbes, comprenant :
(a) un ingrédient herbicide à base de glyphosate présent à raison de 0,08 à 2,0% en poids de la composition, et
(b) un ingrédient herbicide à base d'acide(s) gras qui est constitué d'un acide gras ou d'un mélange d'acides gras, ou d'un sel ou d'un mélange de sels de ces acides, ledit ingrédient herbicide à base d'acide(s) gras étant présent à raison de 0,1 à 3,0% en poids de la composition,
composition dans laquelle les acides gras sont sélectionnés dans le groupe comprenant l'acide caprylique, l'acide pélargonique, l'acide caprique, l'acide undécanoïque, l'acide 10-undécénoïque et l'acide laurique.

2. Composition selon la revendication 1, dans laquelle le sel ou le mélange de sels comprend un sel de potassium, un sel de sodium, un sel de calcium ou un sel d'ammonium.

3. Composition selon la revendication 1 ou 2, dans laquelle l'ingrédient herbicide à base de glyphosate comprend un composé représenté par la formule : 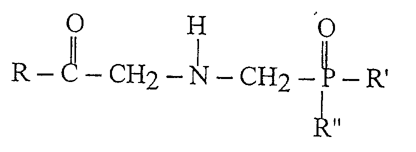 dans laquelle R, R' et R'' sont chacun indépendamment un groupe -OH, un halogène ou un groupe -SH, ou un sel ou un mélange de sels de celui-ci.

4. Composition selon la revendication 3, dans laquelle l'ingrédient herbicide à base de glyphosate comprend de la N-phosphonométhylglycine ou un sel ou un mélange de sels de celle-ci.

5. Composition selon la revendication 4, dans laquelle l'ingrédient herbicide à base de glyphosate comprend un sel d'isopropylamine de la N-phosphonométhylglycine.

6. Composition selon l'une quelconque des revendications 1 à 5, dans laquelle la composition comprend par ailleurs un ingrédient sélectionné dans le groupe comprenant un promoteur de formulation, un émulsionnant et un agent tensioactif.

7. Procédé de contrôle de mauvaises herbes, ledit procédé comprenant l'administration auxdites mauvaises herbes d'une quantité efficace d'une composition comprenant:
(a) un ingrédient herbicide à base de glyphosate présent à raison de 0,08 à 2,0% en poids de la composition, et
(b) un ingrédient herbicide à base d'acide(s) gras qui est constitué d'un acide gras ou d'un mélange d'acides gras, ou d'un sel ou d'un mélange de sels de ceux-ci, l'ingrédient herbicide à base d'acide(s) gras étant présent à raison de 0,1 à 3,0% en poids de la composition, les acides gras étant choisis dans le groupe comprenant l'acide caprylique, l'acide pélargonique, l'acide caprique, l'acide undécanoïque, l'acide 10-undécénoïque et l'acide laurique.

8. Procédé selon la revendication 7, dans lequel l'ingrédient herbicide à base de glyphosate comprend un composé représenté par la formule : 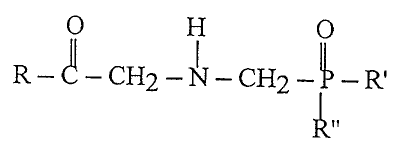 dans laquelle R, R' et R'' sont chaun indépendamment un groupe -OH, un halogène ou un groupe -SH, ou un sel ou un mélange de sels de celui-ci.

9. Procédé selon la revendication 7 ou 8, dans lequel l'acide gras est sélectionné dans le groupe comprenant l'acide caprylique, l'acide pélargonique, l'acide caprique et leurs mélanges; l'ingrédient herbicide à base de glyphosate comprend de la N-phosphonométhylglycine ou un sel ou un mélange de sels de celle-ci.

10. Procédé selon l'une quelconque des revendications 7 à 9, dans lequel la composition est administrée aux mauvaises herbes en volume de 47 à 374 litres à l'hectare.
